## Europäisches Patentamt

## European Patent Office

## Office européen des brevets

(11) Veröffentlichungsnummer: **0 096 173**
**B1**

(12) **EUROPÄISCHE PATENTSCHRIFT**

(45) Veröffentlichungstag der Patentschrift:
24.05.89

(51) Int. Cl.⁴: **B 60 R 11/02, H 05 K 11/02**

(21) Anmeldenummer: **83102638.0**

(22) Anmeldetag: **17.03.83**

(54) Einbaueinrichtung für den Einbau eines Zusatzgerätes für Kraftfahrzeuge.

(30) Priorität: **16.06.82 DE 3222587**

(43) Veröffentlichungstag der Anmeldung:
**21.12.83 Patentblatt 83/51**

(45) Bekanntmachung des Hinweises auf die Patenterteilung:
**24.05.89 Patentblatt 89/21**

(84) Benannte Vertragsstaaten:
**FR IT**

(56) Entgegenhaltungen:
**DE-A- 2 903 176**
**DE-A- 2 927 009**
**DE-B- 2 406 749**
**DE-U- 7 933 920**
**US-A- 3 446 467**
**US-A- 3 710 972**

(73) Patentinhaber: **Blaupunkt-Werke GmbH,
Robert-Bosch-Strasse 200, D-3200 Hildesheim (DE)**

(72) Erfinder: **Fritsch, Günter, Langer Hagen 22,
D-3200 Hildesheim (DE)**

(74) Vertreter: **Eilers, Norbert, Dipl.-Phys., Blaupunkt-Werke
GmbH Robert-Bosch-Strasse 200, D-3200 Hildesheim
(DE)**

## Beschreibung

Die Erfindung geht aus von einer Einbaueinrichtung nach der Gattung des Hauptanspruchs. Bei einer bekannten Einbaueinrichtung (DE-A 29 03 176) ist ein an sämtlichen Vorderkanten flanschartig nach außen gebogener Randabschnitte aufweisender Einbaurahmen vorgesehen. In Aussparungen der Rahmenwände sind von der Vorderkante des Rahmens nach hinten verlaufende Zungen angeordnet, welche bei einem Einsetzen des Rahmens von vorn in die Einbauöffnung des Kraftfahrzeuges nach einem Hochbiegen die Wände der Einbauöffnung hintergreifen und damit den Einbaurahmen beispielsweise in einem Armaturenbrett befestigen. Bei einem derartigen Einbaurahmen müssen jedoch die einzelnen Zungen nach dem Einschieben des Rahmens in die Einbauöffnung hochgebogen werden. Zudem können bei der Befestigung in Einbauwänden mit geringen Wanddicken Schwierigkeiten auftreten.

Die erfindungsgemäße Einbaueinrichtung mit den kennzeichnenden Merkmalen des Hauptanspruchs hat den Vorteil, daß der Befestigungsrahmen ohne weiteren Aufwand in nur einem Arbeitsgang einrastbar in die Einbauöffnung der Befestigungswand eingeklipst werden kann und daß sie zudem eine Befestigung in Einbauwänden mit geringen Wanddicken gestattet.

Durch die in den Unteransprüchen aufgeführten Maßnahmen sind vorteilhafte Weiterbildungen und Verbesserungen der Einbaueinrichtung möglich. So läßt sich die Einbaueinrichtung nach einer Voreinstellung auf die Wanddicke der Einbauwand in einfachster Weise in deren Einbauöffnung durch Einklipsen sicher befestigen.

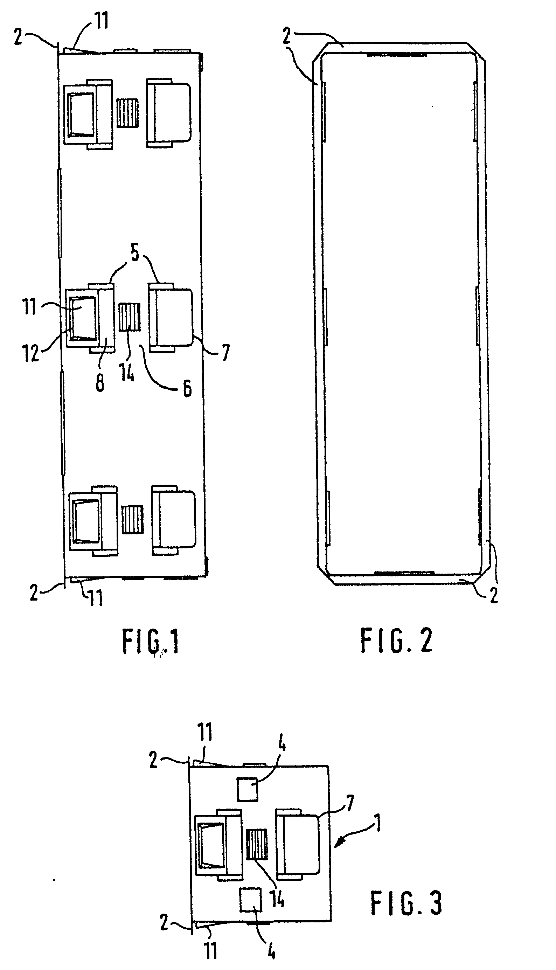

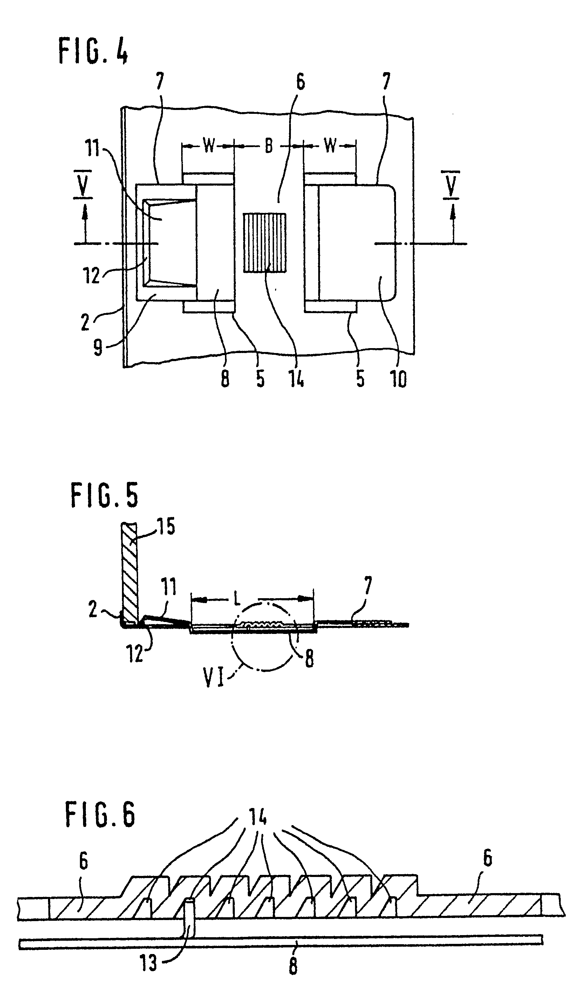

Ein Ausführungsbeispiel der Erfindung ist anhand mehrerer Figuren in der Zeichnung dargestellt und in der nachfolgenden Beschreibung näher erläutert. Es zeigen Figur 1 einen Einbaurahmen in der Draufsicht, Figur 2 den Rahmen in der Vorder- und Figur 3 in der Seitenansicht. Es zeigen Figur 4 einen mit einer Halterung versehenen Abschnitt des Rahmens, Figur 5 eine Schnittzeichnung dieses Abschnittes in Verbindung mit einer Einbauöffnung und Figur 6 einen Ausschnitt der Figur 5 in Lupenzeichnung.

Ein an sich bekannter für den Einbau eines Zusatzgerätes, beispielsweise eines Autoradios in ein Kraftfahrzeug vorgesehener, im wesentlichen quaderförmiger, an Vorder- und Rückseite offener Einbaurahmen 1 weist an sämtlichen Vorderkanten flanschartig nach außen gebogene Randabschnitte 2 auf. Zudem sind in den Seitenflächen 3 des Rahmens 1 Rastausnehmungen 4 ausgespart, in welche beim Einschieben des Autoradios nicht dargestellte federnde Rastmittel einrasten, welche an den Seitenflächen eines ebenfalls nicht dargestellten Autoradios angebracht sind. Die gegenüberliegenden Wände des Rahmens 1 sind mit Halterungen versehen, welche zur Befestigung des Rahmens 1 in einer vorgegebenen Einbauöffnung dienen.

Für jede Halterung sind in der zugehörigen Wand des Rahmens 1 zwei durch einen Steg 6 getrennte, in der Einschubrichtung des Gerätes hintereinander angeordnete, rechteck- und fensterförmige Aussparungen 5 vorgesehen. Diese Aussparungen 5 dienen als Führung für eine aus dünnem Federstahl hergestellte, im wesentlichen rechteckförmige Lasche 7, deren Mitelabschnitt 8 derart gekröpft ist, daß er im Bereich des Steges 6 an der Innenwand des Rahmens 1 anliegt, während die äußeren Enden 9, 10 der Lasche 7 auf der Außenwand des Rahmens 1 anliegen. Der gekröpfte Mittelabschnitt 8 der Lasche 7 ist so bemessen, daß seine Länge L größer als die Breite B des Steges 6 ist und daß die Lasche 7 um den Betrag der Weite W der fensterförmigen Aussparungen 5 in der Führung verschiebbar ist. Das dem Randabschnitt 2 zugewandte Ende 9 der Lasche 7 ist mit einer von Mittelabschnitt 8 flach nach außen ansteigenden keilförmigen Rastnase 11 versehen, welche eine zur Vorderkante des Rahmens 1 gekehrte Sperrkante 12 aufweist. Der Mittelabschnitt 8 der Lasche 7 ist an seiner dem Steg zugewandten Seite mit einer quer zu seiner Bewegungsrichtung angeordneten Rastkante 13 versehen, welche in im Steg 6 eingeprägte Kerben 14 einrastbar ist.

Vor dem Einsetzen der Einbaueinrichtung in eine vorgegebene Einbauöffnung eines Kraftfahrzeuges werden die Laschen 7 mittels der Rastkanten 13 und der ihnen zugeordneten Kerben 14 der Dicke der Einbauwand 15 entsprechend eingerastet. Daraufhin wird der Rahmen 1 von vorn in die Einbauöffnung soweit eingeschoben, bis die flanschartig nach außen gebogenen Randabschnitte 2 an der Vorderseite der Einbauwand 15 anliegen. Während des Einschiebens weichen die Rastnasen 11 aufgrund der Elastizität des Rahmens 1 zurück, nach dem Einschieben nehmen sie jedoch ihre alte Lage wieder ein und hintergreifen den Rand der Einbauöffnung, wobei sie mit ihren Sperrkanten 12 fest an der hinteren Kante der in der Einbauwand 15 vorgesehenen Einbauöffnung anliegen. Anschließend läßt sich das mit Rastmitteln versehene Gerät in den Rahmen einrastbar einschieben. Das eingeschobene Gerät verhindert ein Zurückfedern der Rastnasen 11, wodurch eine besonders sichere Befestigung erzielt wird.

Wenn die Einbauvorrichtung nur für den Einbau in eine Einbauwand mit einer bestimmten Dicke verwendet werden soll, dann kann auf die Verstellbarkeit verzichtet werden, indem man die keilförmigen Rastnasen unmittelbar am Rahmen 1 befestigt oder aus den Seitenwänden des Rahmens 1 herausprägt.

## Patentansprüche

1. Einbaueinrichtung (1) für den Einbau eines Zusatzgerätes für Kraftfahrzeuge, insbesondere eines Autoradios, Kassettengerätes oder dergleichen in einer vorgegebenen Einbauöffnung mit einer Rastvorrichtung, die federnde Rastnasen (11) als erstes Rastmittel und damit zusammenwirkende Rastkanten (12) als zweites Rastmittel umfaßt und von denen die einen an gegenüberliegenden Seiten des Zusatzgerätes wirksam werdenden Rastmittel am Gehäuse befestigbar sind und von denen die anderen Rastmittel an einem quaderförmigen, aus elastischem Material gefertigten, an Vorder- und Rückseite offenen, in den Umfangsabmessungen dem Gerätegehäuse und der Einbauöffnung angepaßten, mit Anschlägen an der Vorderkante versehenen Rahmen angeordnet sind, dessen Mantel zur Befestigung in der Einbauöffnung mit mehreren, den Rand der Einbauöffnung hintergreifenden Halterungen versehen ist, wobei die Halterungen in dafür vorgesehenen Führungen des Rahmens gelagert und die Abstände zwischen den Halterungen und flanschartigen Randabschnitten der Vorderkante des Rahmens verstellbar sind, und daß das Zusatzgerät von vorn in den Rahmen einschiebbar ist, bis die Rastvorrichtung verriegelt ist, dadurch gekennzeichnet, daß die den Rand der Einbauöffnung hintergreifenden Halterungen keilförmige Rastnasen (11) aufweisen, welche mit zur Vorderkante des Rahmens (1) gekehrten Sperrkanten (12) versehen sind, daß die keilförmigen Rastnasen (11) auf Laschen (7) angeordnet sind, daß jede Lasche (7) ein Rastmittel (13) aufweist, welches mit einem zugehörigen, am Rahmen (1) vorgesehenen Rastmittel (14) eine Rastvorrichtung bildet, mit der Lage der Rastnase (11) innerhalb des Bereiches der Führung festlegbar ist, daß im Rahmen (1) jeweils zwei in der Einschubrichtung hintereinander angeordnete, durch einen Steg (6) getrennte fensterförmige Aussparungen (5) als Führung für eine Lasche (7) vorgesehen sind und daß die aus federndem Material hergestellte Lasche (7) derart in den fensterförmigen Aussparungen (5) gelagert ist, daß ihre äußeren Enden (9, 10) auf der Außenwand des Rahmens (1) anliegen und ihr Mittelstück (8) im Bereich des Steges (6) an der Innenwand des Rahmens anliegt.

2. Einbauvorrichtung nach Anspruch 1, dadurch gekennzeichnet, daß das dem Steg (6) zugeordnete Mittelstück (8) der Lasche (7) einen gekröpften Abschnitt aufweist, dessen Länge (L) größer als die Breite (B) des Steges (6) ist.

3. Einbauvorrichtung nach Anspruch 2, dadurch gekennzeichnet, daß der gekröpfte Abschnitt (8) der Lasche (7) eine Rastkante (13) aufweist, welche in im Steg (6) eingeprägte Kerben (14) einrastbar ist.

4. Einbauvorrichtung nach Anspruch 3, dadurch gekennzeichnet, daß die im Steg (6) eingeprägten Kerben (14) sägezahnförmig ausgebildet sind.

## Claims

1. Installation device (1) for installing an accessory unit for motor vehicles, in particular a car radio, cassette unit or the like, in a specified installation opening, having a catch facility which comprises flexible catch lugs (11) as a first catch means and catch edges (12), interacting with them, as a second catch means and of which the one catch means, coming into effect at opposite sides of the accessory unit, can be fixed to the housing and of which the other catch means is arranged on a cuboid-shaped frame which is made of elastic material, is open at the front and rear side, is adapted in the peripheral dimensions to the housing of the unit and to the installation opening and is provided with stops on the front edge and whose shell, for fixing in the installation opening, is provided with a plurality of holders gripping behind the margin of the installation opening, the holders being mounted in frame guides provided for them and the distances between the holders and flange-like marginal sections of the front edge of the frame being adjustable, and that the accessory unit can be pushed into the frame from the front until the catch facility is locked, characterized in that the holders gripping behind the margin of the installation opening have wedge-shaped catch lugs (11) which are provided with locking edges (12) facing the front edge of the frame (1), that the wedge-shaped catch lugs (11) are arranged on straps (7), that each strap (7) has a catch means (13) which, with an associated catch means (14) provided on the frame (1), forms a catch facility with which the position of the catch lug (11) can be fixed within the area of the guide, that two window-shaped recesses (5), arranged one behind the other in the push-in direction and separated by a web (6), are in each case provided in the frame (1) as a guide for a strap (7), and that the strap (7), made of flexible material, is mounted in the window-shaped recesses (5) in such a way that its outer ends (9, 10) bear on the outer wall of the frame (1) and its centre piece (8), in the area of the web (6), bears on the inner wall of the frame.

2. Installation device according to Claim 1, characterized in that the centre piece (8) of the strap (7) allocated to the web (6) has an offset section whose length (L) is greater than the width (B) of the web (6).

3. Installation device according to Claim 2, characterized in that the offset section (8) of the strap (7) has a catch edge (13) which can be snapped into notches (14) impressed in the web (6).

4. Installation device according to Claim 3, characterized in that the notches (14) impressed in the web (6) are designed in a saw-tooth shape.

## Revendications

1. Installation de montage (1) pour monter un accessoire de véhicule automobile notamment d'un auto-radio, d'un lecteur de cassettes ou analogues dans une ouverture de montage prédéterminée à l'aide d'un dispositif d'encliquetage comportant comme premiers moyens d'encliquetage des becs d'encliquetage élastiques (11) et comme seconds moyens d'encliquetage des arêtes d'encliquetage (12) qui coopèrent, et dont les uns sont fixés sur le boîtier pour agir contre les côtés opposés de l'accessoire et dont les autres moyens d'encliquetage sont prévus sur un châssis parallélépipédique, réalisé en un matériau élastique, ayant sa face avant et sa face arrière ouvertes, dont les dimensions extérieures sont adaptées au boîtier de l'accessoire et à celles de l'ouverture de montage, l'arête avant du châssis étant munie de butées, et son enveloppe étant munie de plusieurs moyens de fixation venant prendre derrière le bord de l'ouverture de montage pour assurer la fixation dans l'ouverture de montage, les moyens de fixation étant montés dans des guides du châssis et la distance entre les moyens de fixation et les segments de bord en forme de brides de l'arête avant du châssis étant réglable et en ce que l'accessoire se glisse par l'avant dans le châssis jusqu'à ce que le dispositif de verrouillage soit bloqué, installation caractérisée en ce que les moyens de fixation venant prendre derrière le bord de l'ouverture de montage comportent des becs d'accrochage (11) en forme de coins qui sont munis d'arêtes de blocage (12) tournées vers l'arête avant du châssis (1), en ce que les becs d'encliquetage (11) en forme de coins sont montés sur des pattes (7) et chaque patte (7) comporte un moyen d'encliquetage (13) qui forme un dispositif d'encliquetage avec un moyen d'encliquetage (14) correspondant prévu sur le châssis (1), pour fixer la position du bec d'encliquetage (11) dans la zone de guidage, et en ce que dans le châssis (1) il est prévu chaque fois deux cavités (5) en forme de fenêtres séparées par une entretoise (6), situées l'une derrière l'autre dans la direction d'introduction et servant de moyen de guidage pour une patte (7) et en ce que la patte (7) réalisée en un matériau à ressort est montée dans les cavités (5) en forme de fenêtres pour que ses extrémités extérieures (9, 10) s'appuient sur la paroi extérieure du châssis (1) et que sa pièce intermédiaire (8) s'appuie au niveau de l'entretoise (6) contre la paroi intérieure du châssis.

2. Installation de montage selon la revendication 1, caractérisée en ce que la pièce intermédiaire (8) de la patte (7) associée à l'entretoise (8) présente une section recourbée dont la longueur (L) est supérieure à la largeur (B) de l'entretoise (6).

3. Installation de montage selon la revendication 2, caractérisée en ce que le segment recourbé (8) de la patte (7) comporte une arête d'encliquetage (13) qui peut s'encliqueter dans des encoches (14) matricées dans l'entretoise (6).

4. Installation de montage selon la revendication 3, caractérisée en ce que les encoches (14) matricées dans l'entretoise (6) sont en forme de dents de scie.

FIG.1

FIG.2

FIG.3

FIG. 4

FIG.5

FIG.6